# EUROPÄISCHE PATENTSCHRIFT

(11) **EP 2 520 499 B1**
(45) Veröffentlichungstag und Bekanntmachung des Hinweises auf die Patenterteilung: **21.08.2013**
(21) Anmeldenummer: 12002671.1
(22) Anmeldetag: 17.04.2012
(51) Int. Cl.: B65B 7/16, B65B 51/10, B65B 59/04

(54) **Werkzeuganordnung mit lösbarer Werkzeugverriegelung**
Tool assembly with releasable tool lock
Agencement d'outil avec verrouillage d'outil amovible

(30) Priorität: 04.05.2011 DE 102011100429
(43) Veröffentlichungstag der Anmeldung: 07.11.2012
(73) Patentinhaber: MULTIVAC Sepp Haggenmüller GmbH & Co KG, 87787 Wolfertschwenden (DE)
(72) Erfinder: Präsenz, Jürgen, 87733 Markt Rettenbach (DE)
(74) Vertreter: Grünecker, Kinkeldey, Stockmair & Schwanhäusser

(56) Entgegenhaltungen:
- EP-A1- 1 234 765
- EP-A1- 1 690 794
- DE-A1- 3 026 295
- DE-A1- 3 705 123

## Beschreibung

Die vorliegende Erfindung bezieht sich auf eine Werkzeuganordnung gemäß dem Oberbegriff des Anspruchs 1.

In Verpackungsmaschinen besteht häufig der Bedarf, Werkzeuge oder Werkzeugteile auswechseln zu können. Zwar ist die Abnutzung der Werkzeuge in Verpackungsmaschinen vergleichsweise gering, aber der Hauptzweck eines Werkzeugwechsels besteht bei Verpackungsmaschinen nicht in einem Austausch abgenutzter Werkzeuge, sondern in der Entnahme eines Werkzeugs zu Reinigungszwecken oder einem Austausch eines Werkzeugs eines ersten Formats gegen ein Werkzeug eines anderen Formats. Nach solch einem Formatwechsel können Verpackungen mit einer anderen Form hergestellt werden.

Aus der DE 20 2004 016 538 U1 geht zu diesem Zweck eine Siegelstation einer Tiefziehverpackungsmaschine zum Wechseln einer Siegelkassette hervor. Die Siegelkassette stellt dabei eine handhabbare Einheit dar. Die Siegelkassette ist über Schraubenverbindungen von einem Siegeloberteil durch einen Maschinenbediener lösbar und gegen weitere Siegelkassetten austauschbar, um das Umrüsten von Werkzeugen bei wechselnden Packungsformen zu erleichtern. Dieser Formatwechsel ist jedoch vergleichsweise arbeitsaufwändig.

Eine Schalenverschließmaschine, die aus der DE 10 2008 032 306 A1 hervorgeht, weist eine Hub- und Siegeleinrichtung auf, bei der das bewegbare Siegelwerkzeug von einem Kammeroberteil ausfahrbar ist. Dabei wird die an dem oberhalb des Siegelwerkzeuges angebrachte Hubspindel aus seiner drehbaren Spindelmutter am Kammeroberteil herausgefahren und kann durch ein anderes Siegelwerkzeug ersetzt werden.

Die zum Zeitpunkt der vorliegenden Anmeldung noch unveröffentlichten DE 20 2011 002 723.6 und DE 10 2010 056 318.8 beschreiben jeweils eine Verpackungsmaschine mit einem auswechselbaren Werkzeug. Dabei ist eine Verriegelungseinrichtung vorgesehen, um die auszuwechselnde Werkzeugplatte werkzeuglos vom Werkzeug zu lösen. Die Verriegelungsvorrichtung kann einen mittels Druckluft zum Entriegeln bewegbaren Verriegelungsbolzen aufweisen.

Aufgabe der vorliegenden Erfindung ist es, eine solche Werkzeuganordnung dahingehend zu verbessern, dass bei einem Werkzeugwechsel eine größtmögliche Sicherheit für den Bediener der Werkzeuganordnung und für die Verpackungsmaschine selbst gewährleistet ist.

Diese Aufgabe wird erfindungsgemäß gelöst durch eine Werkzeuganordnung mit den Merkmalen des Anspruchs 1 oder des Anspruchs 13 bzw. durch eine mit solch einer Werkzeuganordnung versehene Siegelstation oder Verpackungsmaschine. Vorteilhafte Weiterbildungen der Erfindung sind in den Unteransprüchen angegeben.

Die erfindungsgemäße Werkzeuganordnung umfasst einen Druckluftkanal, und eine Verriegelungsvorrichtung für das Werkzeug ist so konfiguriert, dass sie bei Vorliegen eines vorgegebenen Entriegelungsdrucks in dem Druckluftkanal entriegelt. Die erfindungsgemäße Werkzeuganordnung umfasst nun ferner eine mit dem Druckluftkanal in Fluidverbindung stehende Entlüftungsöffnung, die derart angeordnet ist, dass sie bei einem Kontakt zwischen dem Werkzeug und einem Gegenwerkzeug verschlossen ist. Beim Gegenwerkzeug kann es sich um eine einfache Auflage oder einen Auflagetisch handeln, aber ebenso gut auch um eine Schalenaufnahme für zu versiegelnde Schalen oder um ein Unterwerkzeug, das mit dem auszuwechselnden Werkzeug zusammenwirkt.

Die Entlüftungsöffnung entlüftet den Druckluftkanal so lange, bis ein dichter Kontakt zwischen dem Werkzeug und dem Gegenwerkzeug entstanden ist. Bis zu diesem Kontakt verhindert die Entlüftungsöffnung damit den Aufbau des zum Entriegeln notwendigen Drucks. Mit anderen Worten dient die erfindungsgemäße Entlüftungsöffnung als Sicherheitseinrichtung, da sie den Aufbau des Entriegelungsdrucks und damit das Entriegeln des Werkzeugs erst zulässt, wenn das auszuwechselnde Werkzeug auf dem Gegenwerkzeug aufliegt. Damit ist sichergestellt, dass das entriegelte Werkzeug nicht unkontrolliert herabfallen kann, da es durch das Gegenwerkzeug getragen wird. Nach dem Entriegeln kann das Werkzeug zum Beispiel seitlich vom Gegenwerkzeug entfernt werden. Bei Bedarf könnte zwischen Werkzeug und Gegenwerkzeug noch eine Führung vorgesehen sein, um die Bewegung des entriegelten Werkzeugs relativ zum Gegenwerkzeug festzulegen. Denkbar wäre es auch, dass das Gegenwerkzeug mit dem auf ihm abgelegten Werkzeug abgesenkt werden kann, um das Entnehmen des Werkzeugs aus der Werkzeuganordnung zu erleichtern.

Die Sicherheit des Betriebs der erfindungsgemäßen Werkzeuganordnung kann weiter dadurch verbessert werden, dass mehrere Verriegelungsvorrichtungen vorgesehen sind. Dies hat den Vorteil, dass sich die Verriegelungskräfte auf mehrere Stellen zwischen dem Werkzeug und der Werkzeughalterung verteilen, so dass jede einzelne Verriegelungsvorrichtung geringere Kräfte aufnehmen muss.

Wenn mehrere Verriegelungsvorrichtungen vorgesehen sind, ist es besonders günstig, wenn ein Druckluftkanalsystem vorgesehen ist, mittels dessen der in dem Druckluftkanal herrschende Druck simultan an jede Verriegelungsvorrichtung anlegbar ist. Auf diese Weise wird sichergestellt, dass alle Verriegelungsvorrichtungen gleichzeitig entriegeln, so dass ein Verkanten des Werkzeugs beim Lösen von der Werkzeughalterung vermieden wird.

Hinsichtlich der Entlüftungsöffnung ist es vorteilhaft, diese an einer Oberfläche des Werkzeugs anzuordnen. Die Entlüftungsöffnung wird dann abgedichtet, wenn die Oberfläche des Werkzeugs in einer bestimmten Stellung des Werkzeugs in flächige Anlage an eine andere Oberfläche gerät. Dieser Flächenkontakt kann beispielsweise der Auflage des Werkzeugs auf dem Gegenwerkzeug entsprechen. Zu diesem Zweck wäre es besonders günstig, wenn die Entlüftungsöffnung an einer zum Gegenwerkzeug weisenden Oberfläche des Werkzeugs angeordnet ist.

Zwischen dem Druckluftkanal und der Entlüftungsöffnung kann ein durch das Werkzeug hindurchführender Entlüftungskanal vorgesehen sein. Er sorgt dafür, dass die Druckluft durch den Entlüftungskanal und über die Entlüftungsöffnung entweichen kann, so dass der Aufbau des Entriegelungsdrucks bis zum Verschließen der Entlüftungsöffnung verhindert wird. Zudem ermöglicht es der Entlüftungskanal, die Entlüftungsöffnung auf der von der Werkzeughalterung abgewandten Seite des Werkzeugs anzuordnen.

In einer vorteilhaften Variante der Erfindung ist ein Überbrückungsdorn zum Überbrücken eines Abstands zwischen der Werkzeughalterung und dem Werkzeug mittels des Entlüftungskanals vorgesehen. Dieser Überbrückungsdorn ermöglicht es, den Entlüftungskanal im Werkzeug bis in das Innere der Werkzeughalterung zu verlängern, um ihn dort mit dem Druckluftkanal in Fluidverbindung zu bringen.

Die erfindungsgemäße Werkzeuganordnung kann ferner wenigstens eine (flexible) Dichtung aufweisen, die sich ringförmig um die Entlüftungsöffnung und/oder um eine in der Werkzeughalterung vorgesehene Aufnahme für den Überbrückungsdorn herumlegt. Die erste dieser Dichtungen kann eine sichere Abdichtung der Entlüftungsöffnung und damit den Aufbau des Entriegelungsdrucks im Druckluftkanal erleichtern. Eine um den Überbrückungsdorn herum befindliche Dichtung verbessert eine fluiddichte Verbindung zwischen dem Druckluftkanal und der Entlüftungsöffnung. Damit wird verhindert, dass zwischen dem Werkzeug und der Werkzeughalterung Druckluft entweicht, was den Aufbau des Entriegelungsdrucks ansonsten erschweren könnte.

Besonders dicht wird die Dichtung, wenn sie einen kegelförmigen Abschnitt aufweist.

Die Sicherheit des Betriebs der erfindungsgemäßen Werkzeuganordnung kann weiter dadurch verbessert werden, dass die Verriegelungsvorrichtung in ihre verriegelte Stellung vorgespannt ist. Dies stellt sicher, dass die Verriegelung aufrechterhalten bleibt, auch wenn die Werkzeuganordnung beziehungsweise die sie enthaltende Arbeitsstation einer Verpackungsmaschine stromlos wird oder die Druckluft unterbrochen wird.

Die Erfindung manifestiert sich auch in einer Werkzeuganordnung mit einer ersten Grenzfläche, an der ein erstes Werkzeugteil und ein zweites Werkzeugteil mittels mindestens einer Verriegelungsvorrichtung lösbar miteinander verriegelbar sind, und mit einer zweiten Grenzfläche, an der das zweite (auszuwechselnde) Werkzeugteil und ein drittes Werkzeugteil lösbar miteinander in Anlage bringbar sind. Dabei ist ein Druckluftsystem vorgesehen und dazu eingerichtet, die wenigstens eine Verriegelungsvorrichtung beim Aufbau eines Entriegelungsdrucks im Druckluftsystem zu entriegeln, und eine an der zweiten Grenzfläche vorgesehene und mit dem Druckluftsystem in Fluidverbindung stehende Entlüftungsöffnung ist bei Anlage des zweiten Werkzeugteils am dritten Werkzeugteil verschließbar. Damit wird der Aufbau des Entriegelungsdrucks so lange verhindert, bis das zweite und das dritte Werkzeugteil an der zweiten Grenzfläche aneinander anliegen.

Einsetzbar ist die erfindungsgemäße Werkzeuganordnung insbesondere in einer Arbeitsstation einer Verpackungsmaschine, beispielsweise in einer Form-, Siegel- oder einer Schneidestation. Wenn sie in einer Siegelstation eingesetzt wird, handelt es sich bei der Werkzeughalterung beispielsweise um das Oberwerkzeug, beim Werkzeug um die Siegelplatte und beim Gegenwerkzeug um das Unterwerkzeug oder um die Schalenaufnahme eines Unterwerkzeugs der Siegelstation.

Schließlich bezieht sich die Erfindung auch auf eine Verpackungsmaschine mit einer Werkzeuganordnung der vorstehend beschriebenen Art.

Im Folgenden wird ein vorteilhaftes Ausführungsbeispiel der Erfindung anhand einer Zeichnung näher erläutert. Im Einzelnen zeigen:
- Figur 1: ein Ausführungsbeispiel einer erfindungsgemäßen Verpackungsmaschine in Form einer Schalenverschließmaschine (Traysealer),
- Figur 2: einen Vertikalschnitt durch eine erfindungsgemäße Werkzeughalterung bei entriegeltem Werkzeug,
- Figur 3: einen Vertikalschnitt durch die in Figur 2 gezeigte Werkzeuganordnung kurz vor dem Verriegeln,
- Figur 4: einen Vertikalschnitt durch die in den Figuren 2 und 3 gezeigte Werkzeuganordnung unmittelbar beim Verriegeln, und
- Figur 5: die in den Figuren 2 bis 4 gezeigte Werkzeughalterung nach dem Anheben des verriegelten Werkzeugs.

Gleiche Komponenten sind in den Figuren durchgängig mit gleichen Bezugszeichen versehen.

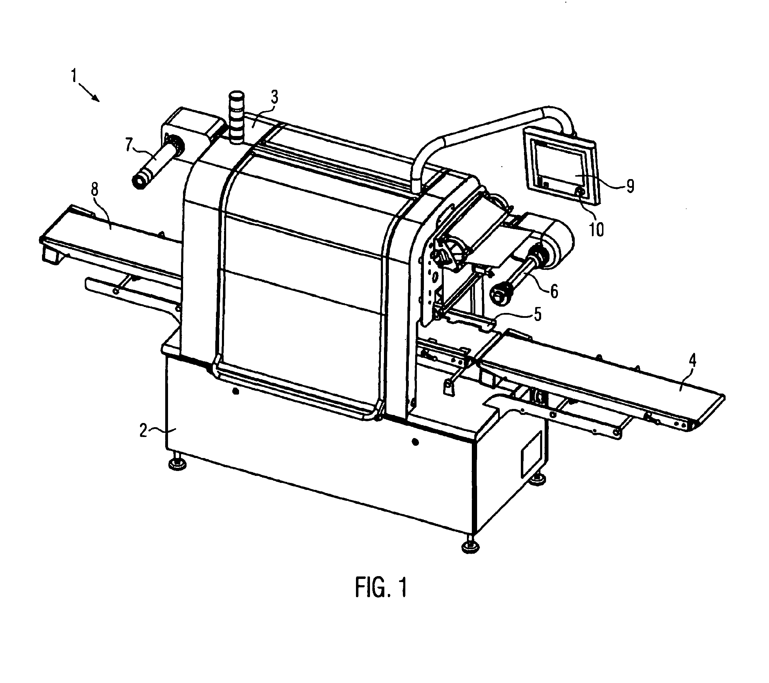

Figur 1 zeigt in perspektivischer Ansicht eine erfindungsgemäße Verpackungsmaschine 1 in Form einer Schalenverschließmaschine. Auf einem Gestell 2 befindet sich die Arbeitsstation 3 der Verpackungsmaschine, im vorliegenden Fall eine Begasungs-, Siegel- und Schneidestation. Ein Zuführband 4 transportiert gefüllte Verpackungsschalen (nicht dargestellt) zur Arbeitsstation 3. Ein Greifer 5 mit seitlichen Greifbacken erfasst die Verpackungsschalen und befördert sie in die Arbeitsstation 3 hinein. Von einem Folienspender 6 wird eine Deckelfolie abgezogen und ebenfalls in die Arbeitsstation 3 geführt. Nach dem Evakuieren und/oder Begasen der Schalen mit einem Austauschgas (MAP) werden die Verpackungsschalen mit der vom Folienspender 6 abgezogenen Deckelfolie luftdicht versiegelt. Ein Schneidwerkzeug schneidet die Deckelfolie passend zu den Verpackungsschalen aus der Deckelfolie aus. Das Restfoliengitter der Deckelfolie wird auf einen Restfolienaufwickler 7 aufgewickelt. Die verschlossenen und vereinzelten Verpackungen werden auf einem Abführband 8 abgelegt und damit aus der Arbeitsstation 3 beziehungsweise aus der Verpackungsmaschine 1 heraustransportiert. Eine Anzeigevorrichtung 9 und Bedienelemente 10 visualisieren den Betriebsablauf und den Betriebszustand der Verpackungsmaschine 1 und ermöglichen einem Bediener die Bedienung der Verpackungsmaschine 1.

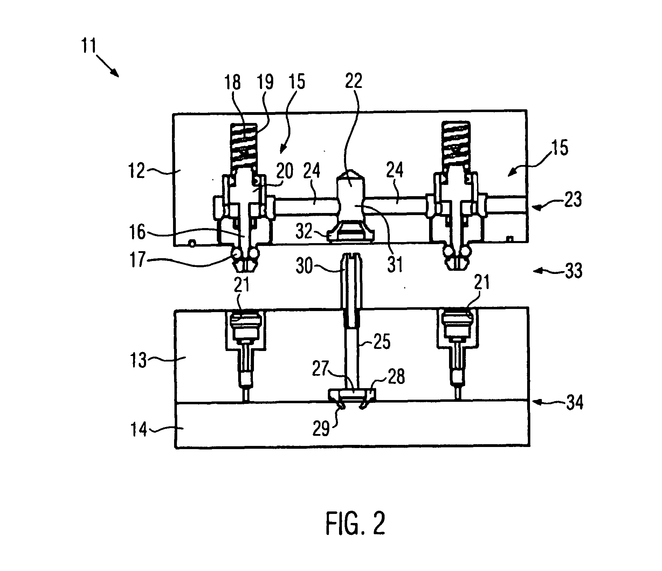

Im Inneren der Arbeitsstation 3 der Verpackungsmaschine 1 ist eine erfindungsgemäße Werkzeuganordnung 11 vorgesehen, die schematisch im Vertikalschnitt in Figur 2 dargestellt ist. Diese Werkzeuganordnung umfasst eine Werkzeughalterung beziehungsweise ein erstes Werkzeugteil 12, ein auswechselbares Werkzeug beziehungsweise ein zweites Werkzeugteil 13 sowie ein Gegenwerkzeug beziehungsweise ein drittes Werkzeugteil 14. Diese sind in vertikaler Richtung übereinander angeordnet, d.h. das auswechselbare Werkzeug 13 befindet sich über dem Gegenwerkzeug 14 und die Werkzeughalterung 12 befindet sich über dem Werkzeug 13.

Mehrere Verriegelungsvorrichtungen 15, von denen im Vertikalschnitt gemäß Figur 2 zwei zu sehen sind, dienen zur lösbaren Verriegelung des auswechselbaren Werkzeugs 13 an der Werkzeughalterung 12. Jede Verriegelung verfügt über einen vertikal ausgerichteten Verriegelungsbolzen 16, der sich in der Werkzeughalterung 12 befindet. Das untere Ende des Verriegelungsbolzens 16 ist konisch. Die konischen Flächen dieses unteren Endes des Verriegelungsbolzens 16 beaufschlagen Verriegelungselemente wie Verriegelungskugeln 17, die beispielsweise durch einen O-Ring nach innen vorgespannt sind und sich um das untere Ende des Verriegelungsbolzens 16 herum verteilen.

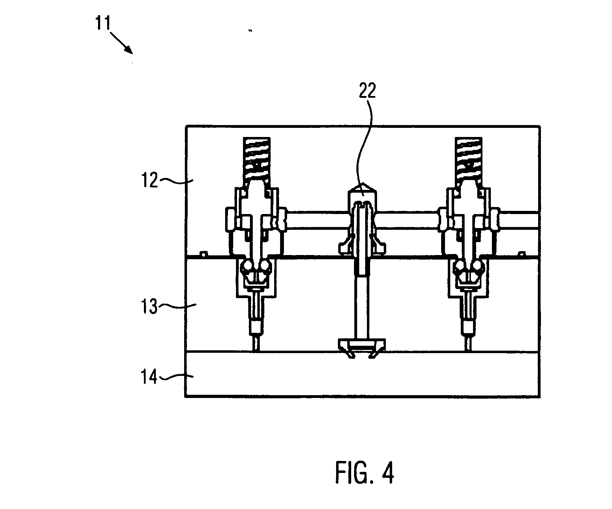

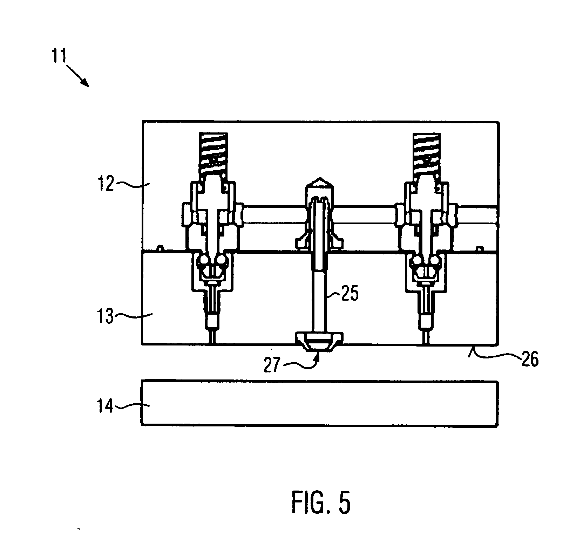

Eine Feder 18 ist in einer Bohrung 19 in der Werkzeughalterung vorgesehen und stützt sich auf einem seitlich abstehenden Flansch 20 des Verriegelungsbolzens 16 ab. Auf diese Weise wird der Verriegelungsbolzen 16 von der Druckfeder 18 nach unten in seine Verriegelungsstellung vorgespannt, in der er die Verriegelungskugeln 17 horizontal nach außen drängt. Befindet sich dabei das Werkzeug 13 in Anlage an der Werkzeughalterung 12, gelangen die Verriegelungselemente 17 in verriegelnden Eingriff mit Verriegelungsnuten 21 im Werkzeug 13, wie dies in den Figuren 4 und 5 zu sehen ist. Damit ist das Werkzeug 13 beziehungsweise der zweite Werkzeugteil 13 an der Werkzeughalterung beziehungsweise am ersten Werkzeugteil 12 lösbar verriegelt.

Im Inneren der Werkzeughalterung 12 ist ferner ein Druckluftsystem beziehungsweise Druckluftkanalsystem 22 vorgesehen. Dieses Druckluftkanalsystem 22 steht mit einer permanent betriebenen oder einer ansteuerbaren Druckluftquelle in Verbindung. Eine Anschlussöffnung 23 des Druckluftsystems 22 kann zum Anschluss der Druckluftquelle dienen.

Das Druckluftkanalsystem 22 verfügt ferner über einen Druckluftkanal 24, der zu jeder der Verriegelungsvorrichtungen 15 führt. Die Druckluftkanäle 24 sind so an die jeweilige Verriegelungsvorrichtung 15 angeschlossen, dass die Druckluft die von der Druckfeder 18 abgewandte Seite des Flansches 20 des Verriegelungsbolzens 16 beaufschlagt. Dies führt dazu, dass sich der Verriegelungsbolzen 16 entgegen der Kraft der Druckfeder 18 nach oben in seine Entriegelungsstellung bewegt, wenn der im Druckluftkanal 24 herrschende Druck einen bestimmten Entriegelungsdruck erreicht oder überschreitet. Das Druckluftkanalsystem 22 verbindet über geeignete Druckluftkanäle 24 sämtliche Verriegelungsvorrichtungen 15 miteinander, so dass alle Verriegelungsvorrichtungen 15 gleichzeitig den Entriegelungsdruck erreichen und entriegeln.

Das zum Beispiel für einen Formatwechsel auswechselbare Werkzeug 13 verfügt über einen das Werkzeug 13 von oben nach unten durchsetzenden Entlüftungskanal 25. Auf der zum Gegenwerkzeug 14 weisenden Oberfläche 26 des Werkzeugs 13 (siehe Figur 5) öffnet sich der Entlüftungskanal 25 zu einer Entlüftungsöffnung 27. Eine erste Dichtung 28 mit einem kegelstumpfförmig nach unten abstehenden Abschnitt 29 liegt um die Entlüftungsöffnung 27 herum, um die Entlüftungsöffnung 27 bei Anlage des Werkzeugs 13 am Gegenwerkzeug 14 (bei dem es sich beispielsweise um ein Unterwerkzeug oder um eine Schalenaufnahme handeln kann) luftdicht gegen das Gegenwerkzeug 14 abzudichten.

Das der Entlüftungsöffnung 27 gegenüberliegende Ende des Entlüftungskanals 25 ist durch einen nach oben vom Werkzeug 13 abstehenden Überbrückungsdorn 30 verlängert. Eine Aufnahme 31 in der Werkzeughalterung 12 dient dort zur Aufnahme des Überbrückungsdorns 30. Die Aufnahme 31 steht in Fluidverbindung mit dem Druckluftsystem 22. Eine zweite Dichtung 32, deren Form im vorliegenden Ausführungsbeispiel der der ersten Dichtung 28 entspricht, erstreckt sich um den Rand der Aufnahme 31, um die Aufnahme 31 nach außen hin luftdicht gegen den Überbrückungsdorn 30 abzudichten.

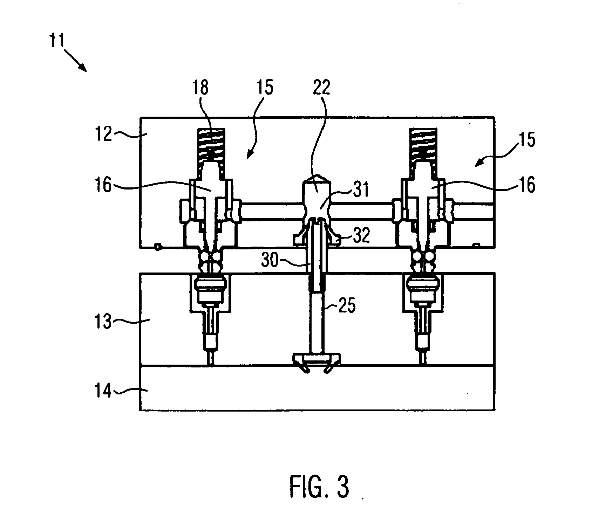

Zwischen der Werkzeughalterung 12 und dem auswechselbaren Werkzeug 13 ist eine erste Grenzfläche 33 gebildet, an der die Werkzeughalterung 12 und das Werkzeug 13 mittels der Verriegelungsvorrichtungen 15 lösbar miteinander verriegelt werden können. In der verriegelten Stellung befinden sich die Werkzeughalterung 12 und das Werkzeug 13 an der ersten Grenzfläche 33 in Anlage aneinander. An einer zweiten Grenzfläche 34 befinden sich in Figur 3 das Werkzeug 13 und das Gegenwerkzeug 14 miteinander in Anlage. Das Gegenwerkzeug 14 dient dabei als Ablage, auf der das entriegelte Werkzeug 13 abgelegt ist.

Nachfolgend wird das Auswechseln des Werkzeugs 13 in der erfindungsgemäßen Werkzeuganordnung 11 unter Bezug auf die Figuren 2 bis 5 erläutert.

Eine Führung und/oder ein Anschlag können vorgesehen sein, damit der Bediener das Werkzeug 13 sicher an der in Figur 2 gezeigten Stellung auf dem Gegenwerkzeug 14 positionieren kann. Diese Stellung des Werkzeugs 13 zeichnet sich dadurch aus, dass das Werkzeug 13 durch eine vertikale Hubbewegung so an die Werkzeughalterung 12 herangeführt werden kann, dass das Werkzeug 13 dort verriegelt werden kann.

Diese Bewegung des Werkzeugs 13 ist in Figur 3 dargestellt. Das Gegenwerkzeug 14 kann als Hubvorrichtung ausgebildet sein und dazu dienen, das auf ihm abgelegte Werkzeug 13 nach oben an die Werkzeughalterung 12 heranzuheben. Bei der in Figur 3 gezeigten Situation hat sich der Abstand des Werkzeugs 13 von der Werkzeughalterung 12 an der ersten Grenzfläche 33 so weit verringert, dass er kleiner ist als die Höhe des Überbrückungsdorns 30. Folglich gelangt die Spitze des Überbrückungsdorns 30 in die Aufnahme 31 hinein und die Dichtung 32 dichtet den Überbrückungsdorn 30 gegen die Wand der Werkzeughalterung 12 ab. Der Entlüftungskanal 25 im Werkzeug 13 befindet sich damit in Fluidverbindung mit dem Druckluftkanalsystem 22. Vor allem aber ist die Öffnung des Druckluftkanals 22 an der Aufnahme 31 durch den dichtenden Eingriff zwischen der Dichtung 32 und dem Überbrückungsdorn 30 verschlossen. Dies ermöglicht es, in dem Druckluftkanalsystem 22 einen Entriegelungsdruck aufzubauen, der die Verriegelungsbolzen 16 entgegen der Kraft der Druckfedern 18 nach oben bewegt, weil gleichzeitig die Entlüftungsöffnung 27 verschlossen ist. Die Verriegelungsvorrichtungen 15 entriegeln also gleichzeitig, d.h. durch den Rückzug des Verriegelungsbolzens 16 können sich die Verriegelungselemente 17 nach innen bewegen.

Dies wiederum ermöglicht es den Verriegelungsvorrichtungen 15, beim weiteren Anheben des Werkzeugs 13 in das Werkzeug 13 einzutauchen, wie in Figur 4 gezeigt. Figur 4 zeigt die Situation, in der das Werkzeug 13 an der ersten Grenzfläche 33 an die Werkzeughalterung 12 angedockt ist. Wenn der Druck im Druckluftkanalsystem 22 wieder sinkt, bewegen sich die durch die Druckfedern 18 vorgespannten Verriegelungsbolzen 16 nach unten, wobei sie durch ihre konischen Enden die Verriegelungskugeln 17 nach außen treiben. Die Verriegelungskugeln 17 gelangen dann in Eingriff mit den Verriegelungsnuten 21 im Werkzeug 13, woraufhin das Werkzeug 13 mit der Werkzeughalterung 12 verriegelt ist.

Wie in Figur 5 gezeigt, hält diese Verriegelung das Werkzeug 13 an der Werkzeughalterung 12, auch wenn nun das Gegenwerkzeug 14 wieder nach unten abgesenkt wird und sich von dem Werkzeug 13 löst. Durch das Lösen des Gegenwerkzeugs 14 vom Werkzeug 13 wird die Entlüftungsöffnung 27 an der zweiten Grenzfläche 34 geöffnet. Durch sie kann ständig die im Druckluftkanalsystem 22 enthaltene Druckluft entweichen, so dass sich in den Druckluftkanälen 24 des Druckluftkanalsystems 22 kein Entriegelungsdruck aufbauen kann. Damit wird gewährleistet, dass sich das Werkzeug 13 nicht unbeabsichtigt von der Werkzeughalterung 12 lösen kann. Stattdessen können die Verriegelungsvorrichtungen 15 erst dann wieder entriegeln, wenn - wie in Figur 4 gezeigt - das Werkzeug 13 wieder in Anlage am Gegenwerkzeug 14 ist. Denn erst dann ist die Entlüftungsöffnung 27 wieder abgedichtet, und im Druckluftkanalsystem 22 kann sich der Entriegelungsdruck aufbauen.

Ausgehend von dem dargestellten Ausführungsbeispiel kann die Erfindung selbstverständlich in vielfacher Hinsicht verändert werden. Beispielsweise ist es denkbar, eine solche Werkzeuganordnung 11 an beliebiger Stelle in einer Verpackungsmaschine 11 oder auch in anderen Maschinen einzusetzen. Während bereits eine Verriegelungsvorrichtung 15 zum Verriegeln des Werkzeugs 13 an der Werkzeughalterung 12 ausreichen würde, können nicht nur zwei, sondern auch drei, vier oder noch mehr Verriegelungsvorrichtungen 15 zum Verriegeln des Werkzeugs 13 vorgesehen sein.

## Patentansprüche

1. Werkzeuganordnung (11) mit einer Werkzeughalterung (12), einem Werkzeug (13) und wenigstens einer Verriegelungsvorrichtung (15) zum lösbaren Verriegeln des Werkzeugs (13) mit der Werkzeughalterung (12), wobei ein Gegenwerkzeug (14) vorgesehen ist und die Werkzeughalterung (12) einen Druckluftkanal (24) aufweist, wobei ferner die Verriegelungsvorrichtung (15) derart konfiguriert ist, dass sie bei Vorliegen eines vorgegebenen Drucks in dem Druckluftkanal (24) entriegelt, **dadurch gekennzeichnet, dass** eine mit dem Druckluftkanal (24) in Fluidverbindung stehende Entlüftungsöffnung (27) vorgesehen und derart angeordnet ist, dass sie bei einem Kontakt zwischen dem Werkzeug (13) und dem Gegenwerkzeug (14) verschlossen ist, wobei die Entlüftungsöffnung (27) an einer Oberfläche (26) des Werkzeugs (13) angeordnet ist.

2. Werkzeuganordnung nach Anspruch 1, **dadurch gekennzeichnet, dass** mehrere Verriegelungsvorrichtungen (15) vorgesehen sind.

3. Werkzeuganordnung nach Anspruch 2, **dadurch gekennzeichnet, dass** ein Druckluftkanalsystem (22) vorgesehen ist, mittels dessen der in dem Druckluftkanal (24) herrschende Druck simultan an jede Verriegelungsvorrichtung (15) anlegbar ist.

4. Werkzeuganordnung nach einem der vorangehenden Ansprüche, **dadurch gekennzeichnet, dass** die Entlüftungsöffnung (27) an einer zum Gegenwerkzeug (14) weisenden Oberfläche (26) des Werkzeugs (13) angeordnet ist.

5. Werkzeuganordnung nach einem der vorangehenden Ansprüche, **dadurch gekennzeichnet, dass** zwischen dem Druckluftkanal (24) und der Entlüftungsöffnung (27) ein durch das Werkzeug (13) hindurchführender Entlüftungskanal (25) vorgesehen ist.

6. Werkzeuganordnung nach einem der vorangehenden Ansprüche, **gekennzeichnet durch** einen Überdrückungsdorn (30) zum Überbrücken eines Abstands zwischen der Werkzeughalterung (12) und dem Werkzeug (13) mittels des Entlüftungskanals (25).

7. Werkzeuganordnung nach Anspruch 6, **gekennzeichnet durch** wenigstens eine Dichtung (32), die um eine in der Werkzeughalterung (12) vorgesehene Aufnahme für den Überbrückungsdorn (30) vorgesehen ist.

8. Werkzeuganordnung nach einem der Ansprüche 1 bis 5, **gekennzeichnet durch** wenigstens eine Dichtung (28), die ringförmig um die Entlüftungsöffnung (27) vorgesehen ist.

9. Werkzeuganordnung nach den Ansprüchen 7 und 8, wobei eine Dichtung (28) ringförmig um die Entlüftungsöffnung (27) herum und eine weitere Dichtung (32) ringförmig um die in der Werkzeughalterung (12) vorgesehene Aufnahme für den Überbrückungsdorn (30) vorgesehen ist.

10. Werkzeuganordnung nach einem der Ansprüche 7 bis 9, **dadurch gekennzeichnet, dass** die Dichtung (28, 32) einen kegelförmigen Abschnitt (29) aufweist.

11. Werkzeuganordnung nach einem der vorangehenden Ansprüche, **dadurch gekennzeichnet, dass** die Verriegelungsvorrichtung (15) in ihre verriegelte Stellung vorgespannt ist.

12. Siegelstation (3) mit einer Werkzeuganordnung (11) gemäß einem der vorangehenden Ansprüche, wobei es sich bei der Werkzeughalterung (12) um das Oberwerkzeug, beim Werkzeug (13) um die Siegelplatte und beim Gegenwerkzeug (14) um das Unterwerkzeug oder um die Schalenaufnahme eines Unterwerkzeugs der Siegelstation (3) handelt.

13. Werkzeuganordnung (11) mit einer ersten Grenzfläche (33), an der ein erstes Werkzeugteil (12) und ein zweites Werkzeugteil (13) mittels mindestens einer Verriegelungsvorrichtung (15) lösbar miteinander verriegelbar sind, und mit einer zweiten Grenzfläche (34), an der das zweite Werkzeugteil (13) und ein drittes Werkzeugteil (14) lösbar miteinander in Anlage bringbar sind,
wobei ein Druckluftsystem (22) vorgesehen und dazu eingerichtet ist, die wenigstens eine Verriegelungsvorrichtung (15) beim Aufbau eines Entriegelungsdrucks im Druckluftsystem (22) zu entriegeln,
wobei ferner an der zweiten Grenzfläche (34) eine mit dem Druckluftsystem (22) in Fluidverbindung stehende und bei Anlage des zweiten Werkzeugteils (13) am dritten Werkzeugteil (14) verschließbare Entlüftungsöffnung (27) vorgesehen ist.

14. Siegelstation (3) mit einer Werkzeuganordnung (11) nach Anspruch 13.

15. Verpackungsmaschine (1) mit einer Werkzeuganordnung (11) nach einem der Ansprüche 1 bis 11 oder 13 oder mit einer Siegelstation (3) nach einem der Ansprüche 12 oder 14.

## Claims

1. A tool arrangement (11), comprising a tool holder (12), a tool (13), and at least one locking device (15) for detachably locking the tool (13) with the tool holder (12), wherein a counter-tool (14) is provided and the tool holder (12) includes a compressed-air duct (24), wherein further the locking device (15) is designed such that it unlocks as soon as a given pressure has been reached in the compressed-air duct (24),
**characterized in that**
a vent hole (27) is provided which is in fluid connection with the compressed-air duct (24) and arranged in such a manner that it is closed when there is a contact between the tool (13) and the counter-tool (14), wherein the vent hole (27) is arranged at a surface (26) of the tool (13).

2. The tool arrangement according to claim 1,
**characterized in that**
a plurality of locking devices (15) is provided.

3. The tool arrangement according to claim 2,
**characterized in that**
a compressed-air duct system (22) is provided by means of which the pressure prevailing in the compressed-air duct (24) can simultaneously be applied to each of said locking devices (15).

4. The tool arrangement according to any one of the preceding claims,
**characterized in that**
the vent hole (27) is arranged at a surface (26) of the tool (13) facing the counter-tool (14).

5. The tool arrangement according to any one of the preceding claims,
**characterized in that**
a vent duct (25) passing through the tool (13) is provided between the compressed-air duct (24) and the vent hole (27).

6. The tool arrangement according to any one of the preceding claims,
**characterized by**
a bridging mandrel (30) for bridging a distance between the tool holder (12) and the tool (13) by means of the vent duct (25).

7. The tool arrangement according to claim 6,
**characterized by**
at least one sealing (32) being arranged around a socket provided in the tool holder (12) for the bridging mandrel (30).

8. The tool arrangement according to any of claims 1 to 5, **characterized by** at least one sealing (28) annularly being arranged around the vent hole (27).

9. The tool arrangement according to claims 7 and 8, wherein a sealing (28) is arranged annularly lying around the vent hole (27), and a further sealing (32) is provided annularly lying around the socket for the bridging mandrel (30) provided in the tool holder (12).

10. The tool arrangement according to claim 8,
**characterized in that**
the sealing (28, 32) includes a cone-shaped portion (29).

11. The tool arrangement according to any one of the preceding claims,
**characterized in that**
the locking device (15) is biased into its locked position.

12. A sealing station (3), comprising a tool arrangement (11) according to any one of the preceding claims, wherein the tool holder (12) is the upper tool, the tool (13) is the sealing plate, and the counter-tool (14) is the lower tool or the tray receiver of a lower tool of the sealing station (3).

13. A tool arrangement (11), comprising a first boundary area (33) to which a first tool part (12) and another tool part (13) can detachably be locked with one other by means of at least one locking device (15), and another boundary area (34) to which the second tool part (13) and a third tool part (14) can detachably be attached,
wherein a compressed-air system (22) is provided and designed to unlock the at least one locking device (15) while building up an unlocking pressure in the compressed-air duct system (22),
wherein further a vent hole (27) is provided at the second boundary area (34), which is in fluid connection with the compressed-air system (22) and can be closed when the second tool part (13) abuts the third tool part (14).

14. Sealing station (13) with a tool arrangement according to claim 13.

15. A packaging machine (1), comprising a tool arrangement (11) according to any one of claims 1 to 11 or 13, or comprising a sealing station (3) according to any of claims 12 or 14.

## Revendications

1. Porte-outil (11) comprenant un support d'outil (12), un outil (13) et au moins un dispositif de verrouillage (15) pour verrouiller l'outil (13) de façon amovible sur le support d'outil (12), dans lequel un contre-outil (14) est pourvu et le support d'outil (12) comporte un canal d'air comprimé (24), dans lequel le dispositif de verrouillage (15) est en outre configuré de telle sorte qu'il se déverrouille lorsqu'une pression prédéterminée est présente dans le canal d'air comprimé (24), **caractérisé en ce qu'**une ouverture de mise à l'air libre (27) qui reste en communication fluide avec le canal d'air comprimé (24) est pourvue et agencée de telle sorte qu'elle est obturée lors d'un contact entre l'outil (13) et le contre-outil (14), dans lequel l'ouverture de mise à l'air libre (27) est agencée dans une surface (26) de l'outil (13).

2. Porte-outil selon la revendication 1, **caractérisé en ce que** plusieurs dispositifs de verrouillage (15) sont pourvus.

3. Porte-outil selon la revendication 2, **caractérisé en ce qu'**un système de canal d'air comprimé (22) est pourvu grâce auquel la pression qui règne dans le canal d'air comprimé (24) peut être appliquée simultanément dans chaque dispositif de verrouillage (15).

4. Porte-outil selon l'une des revendications précédentes, **caractérisé en ce que** l'ouverture de mise à
l'air libre (27) est agencée dans une surface (26) de l'outil (13) orientée vers le contre-outil (14).

5. Porte-outil selon l'une des revendications précédentes, **caractérisé en ce qu'**un canal de mise à l'air libre (25) traversant l'outil (13) est pourvu entre le canal d'air comprimé (24) et l'ouverture de mise à l'air libre (27).

6. Porte-outil selon l'une des revendications précédentes, **caractérisé par** une douille de pontage (30) pour ponter une distance entre le support d'outil (12) et l'outil (13) à l'aide du canal de mise à l'air libre (25).

7. Porte-outil selon la revendication 6, **caractérisé par** au moins une étanchéité (32) qui est pourvue autour d'un évidement réalisé dans le support d'outil (12) pour le goujon de pontage (30).

8. Porte-outil selon l'une des revendications 1 à 5, **caractérisé par** au moins une étanchéité (28) qui est pourvue sous forme d'un anneau autour de l'ouverture de mise à l'air libre (27).

9. Porte-outil selon les revendications 7 et 8, dans lequel sont pourvues une étanchéité (28) sous forme d'un anneau autour de l'ouverture de mise à l'air libre (27) et une autre étanchéité (32) sous forme d'un anneau autour de l'évidement réalisé dans le support d'outil (12) pour le goujon de pontage (30).

10. Porte-outil selon l'une des revendications 7 à 9, **caractérisé en ce que** l'étanchéité (28, 32) présente un segment (29) de forme conique.

11. Porte-outil selon l'une des revendications précédentes, **caractérisé en ce que** le dispositif de verrouillage (15) est précontraint dans sa position verrouillée.

12. Station de scellage (3) comportant un porte-outil (11) selon l'une des revendications précédentes, dans laquelle le support d'outil (12) est l'outil supérieur, l'outil (13) est la plaque de scellage, et le contre-outil (14) est l'outil inférieur ou le logement de coque d'un outil inférieur de la station de scellage (3).

13. Porte-outil (11) comportant une première surface de délimitation (33) sur laquelle un premier élément d'outil (12) et un deuxième élément d'outil (13) peuvent être verrouillés entre eux de manière amovible à l'aide d'au moins un dispositif de verrouillage (15), et comportant une deuxième surface de délimitation (34) sur laquelle le deuxième élément d'outil (13) et un troisième élément d'outil (14) peuvent être mis en contact entre eux de manière amovible,
dans lequel un système d'air comprimé (22) est pourvu et agencé pour déverrouiller l'au moins un dispositif de verrouillage (15) lors de l'augmentation d'une pression de déverrouillage dans le système d'air comprimé (22),
dans lequel en outre une ouverture de mise à l'air libre (27) qui reste en connexion fluide avec le système d'air comprimé (22) et obturable par contact du deuxième élément d'outil (13) contre le troisième élément d'outil (14) est pourvue dans la deuxième surface de délimitation (34).

14. Station de scellage (3) comportant un porte-outil (11) selon la revendication 13.

15. Machine d'emballage (1) comportant un porte-outil (11) selon l'une des revendications 1 à 11 ou 13, ou comportant une station de scellage (3) selon l'une des revendications 12 ou 14.
